# EUROPÄISCHE PATENTSCHRIFT

(11) **EP 3 610 189 B1**
(45) Veröffentlichungstag und Bekanntmachung des Hinweises auf die Patenterteilung: **16.06.2021**
(21) Anmeldenummer: 18716556.8
(22) Anmeldetag: 29.03.2018
(51) Int. Cl.: F16M 11/04, F16M 11/10, F16M 11/20, F16M 13/00, F16M 13/02, H04M 1/02

(54) **HALTER FÜR FLACHE, IN ETWA RECHTECKIGE GERÄTE WIE TABLET-COMPUTER ODER SMARTPHONES**
HOLDER FOR FLAT, APPROXIMATELY RECTANGULAR DEVICES SUCH AS TABLET COMPUTERS OR SMARTPHONES
SUPPORT POUR APPAREILS PLATS APPROXIMATIVEMENT RECTANGULAIRES, TELS QUE TABLETTES NUMÉRIQUES OU SMARTPHONES

(30) Priorität: 11.04.2017 DE 102017107842
(43) Veröffentlichungstag der Anmeldung: 19.02.2020
(73) Patentinhaber: Kinetix AG, 7000 Chur (CH)
(72) Erfinder: KELLER, Michael Andreas, 72250 Freudenstadt (DE)
(74) Vertreter: DREISS Patentanwälte PartG mbB
(86) Internationale Anmeldenummer: PCT/EP2018/058050
(87) Internationale Veröffentlichungsnummer: WO 2018/188961

(56) Entgegenhaltungen:
- DE-U1-202015 007 168
- US-A1- 2012 145 843

## Beschreibung

Die Erfindung betrifft einen Halter zur lösbaren Befestigung eines flachen, in etwa rechteckigen Geräts wie eines Tablet-Computers oder eines Smartphones an einem Bauteil, insbesondere an einem Bauteil eines Kraftfahrzeugs, wobei der Halter eine Halteeinrichtung zur lösbaren Halterung des Geräts und ein mit der Haltereinrichtung verbundenes Befestigungselement zur Verbindung des Halters mit dem Bauteil aufweist, wobei ein um eine Drehachse drehbares Drehlager vorgesehen ist, das mit der Haltereinrichtung verbunden ist und wobei ein mit dem Drehlager verbundenes Schwenklager vorgesehen sind, das mit dem Befestigungselement verbunden ist.

Derartige Halter sind aus dem Stand der Technik beispielsweise aus der EP 2 528 781 B1 bekannt. Bei einem solchen, aus dem Stand der Technik bekannten Halter ist das Drehlager mit dem Schwenklager mittelbar über ein zweites Drehlager verbunden, wobei somit eine Art "Pleuellösung" realisiert werden kann, mittels derer der Halter bzw. das am Halter angeordnete Gerät zwischen zwei Gebrauchsstellungen verschwenkt werden kann. Dabei ist es denkbar, diesen Halter mittels eines dafür ausgebildeten Befestigungselements in einer Buchse eines Kraftfahrzeugs zu befestigen oder die Halter beispielsweise mittelbar mittels einer dafür vorgesehenen Befestigungseinrichtung an den Kopfstützenstangen eines Kraftfahrzeugs zu befestigen.

Insbesondere bei großen Tablet-Computern der neueren Generation, die in der Draufsicht oftmals eine Größe aufweisen, welche die Fläche eines DIN-A4-Blatts übersteigt, haben sich diese Halter jedoch insbesondere bei einer Befestigung an den Kopfstützenstangen als teilweise nachteilig herausgestellt. Einerseits kann eine Stellung des Tablet-Computers in eine Hochformatstellung aufgrund der Nähe zum Fahrzeugdach bzw. Fahrzeughimmel aufgrund des "Pleuels" verhindert sein.

Andererseits weisen die neuartigen, besonders großen Tablet-Computer Displaygrößen von 13 Zoll und mehr auf. Diese Größe der Tablet-Computer wirkt sich auch auf die Masse der Tablet-Computer aus, welche ebenfalls ansteigt. In einem Crashfall ist dabei der lange Hebelarm des aus der EP 2 528 781 B1 bekannten Pleuels aufgrund der größeren Masse nachteilig. Die noch nicht veröffentlichten deutschen Patentanmeldung DE 10 2016 102 611.5 beschreibt einen Halter ohne ein solches Pleuel, bei dem radial verlagerbare Rastelemente mittels einer Ringfeder nach radial innen in eine Rastposition vorgespannt sind, in welcher ein Verdrehen eines Drehlagers verhindert ist, wobei die Rastelemente entgegen der Federkraft in eine Freigabeposition bewegbar sind, in welcher ein Verdrehen des Drehlagers ermöglicht ist.

Aus der US 2012/0145843 A1 ist ein Halter mit den Merkmalen des Oberbegriffs des Patentanspruchs 1 bekannt. Ein weiterer Halter ist aus der DE 20 2015 007 168 U1 bekannt.

Der Erfindung liegt daher die Aufgabe zugrunde, einen Halter zur lösbaren Befestigung eines flachen, in etwa rechteckigen Geräts wie eines Tablet-Computers oder eines Smartphones an einem Bauteil, insbesondere an einem Bauteil eines Kraftfahrzeugs bereitzustellen, mit dem auch größere Tablet-Computer stabil und sicher befestigt werden können und welcher einfach und kostengünstig herstellbar ist.

Diese Aufgabe wird durch einen Halter mit den Merkmalen des Anspruchs 1 gelöst. Vorteilhafte Weiterbildungen sind in den Unteransprüchen genannt.

Der erfindungsgemäße Halter zeichnet sich dadurch aus, dass das Drehlager einen ersten mit der Halteeinrichtung verbundenen Drehlagerabschnitt und einen zweiten mit dem Befestigungselement verbundenen Drehlagerabschnitt aufweist, wobei am Drehlager eine Federscheibe vorgesehen ist, die mit der Federscheibe einstückig verbundene Federarme mit Rastabschnitten aufweist, die senkrecht zur Drehachse des Drehlagers zwischen einer radial inneren Rastposition und einer radial äußeren Freigabeposition verlagerbar sind, wobei der erste Drehlagerabschnitt gegenüber dem zweiten Drehlagerabschnitt in der Freigabeposition verdrehbar ist und wobei der erste Drehlagerabschnitt gegenüber dem zweiten Drehlagerabschnitt in der Rastposition fixiert ist, wobei die Federscheibe derart ausgebildet und angeordnet ist, dass die Rastabschnitte mittels der Federarme nach radial innen in die Rastposition vorgespannt sind. Vorteilhafterweise gleiten der erste und der zweite Drehlagerabschnitt beim Verdrehen um das Drehlager aufeinander. Es ist dabei denkbar, dass die Federscheibe aus einem Federstahl ausgebildet ist. Durch Vorsehen einer derartigen Federscheibe kann ein insgesamt sehr einfacher, platzsparender, kostengünstiger und stabiler Aufbau des Halters realisiert werden.

In einer ersten vorteilhaften Weiterbildung des Halters ist vorgesehen, dass die Halteeinrichtung eine Aufnahme für das Gerät und im Bereich der Aufnahme angeordnete Halteelemente zur Halterung des Geräts aufweist und dass der erste Drehlagerabschnitt auf der der Aufnahme abgewandten Seite der Halteeinrichtung angeordnet ist. Vorteilhafterweise ist der erste Drehlagerabschnitt direkt mit der Halteeinrichtung verbunden, ist jedoch in jedem Falle drehfest mit der Halteeinrichtung verbunden, bspw. verschraubt.

Vorteilhafterweise ist ein Verbindungselement vorgesehen, wobei der zweite Drehlagerabschnitt am Verbindungselement angeordnet ist und wobei das Verbindungselement Schwenklagerabschnitte des Schwenklagers aufweist. Dabei ist es ferner denkbar, dass am Befestigungselement Schwenklagergegenabschnitte vorgesehen sind, wobei die Schwenklagerabschnitte und die Schwenklagergegenabschnitte derart miteinander korrespondieren, dass das Schwenklager als Reiblager ausgebildet ist.

Weiterhin ist es vorteilhaft, wenn der erste Drehlagerabschnitt als Konus ausgebildet ist, wobei der zweite Drehlagerabschnitt als Gegenkonus ausgebildet ist. Als besonders vorteilhaft hat es sich dabei erwiesen, wenn der Konus und der Gegenkonus gegenüber der Drehachse des Drehlagers einen identischen Neigungswinkel aufweisen und koaxial zueinander angeordnet sind, so dass der Konus und der Gegenkonus zur Realisierung des Drehlagers beim Verdrehen aufeinander abgleiten können.

Um eine Verstellung eines Tablet-Computers oder eines Smartphones vom Hoch- ins Querformat oder umgekehrt ermöglichen zu können und den Halter in der jeweiligen Position zu verrasten, hat es sich als besonders vorteilhaft erwiesen, wenn am ersten Drehlagerabschnitt mehrere, vorzugsweise 4 Rastnuten vorgesehen sind, die über den Umfang des ersten Drehlagerabschnitts in regelmäßigen Abständen zueinander angeordnet sind. Wenn 4 Rastnuten vorgesehen sind ist es besonders vorteilhaft, wenn die Rastnuten in einem Winkel von jeweils 90° zueinander angeordnet sind. Wenn 4 Rastnuten in einem Winkel von je 90° zueinander angeordnet sind ist lediglich eine Verstellung vom Hoch- ins Querformat möglich. Wenn mehr als 4 Rastnuten in kleineren Winkelabständen vorgesehen sind, kann auch eine Verrastung in Zwischenpositionen ermöglicht werden.

Gemäß einer besonders vorteilhaften Weiterbildung des Halters ist vorgesehen, dass die Rastabschnitte mit den Rastnuten derart korrespondieren, dass die Rastabschnitte in der Rastposition zumindest teilweise in die Rastnuten eingerückt sind. So ist es beispielsweise denkbar, dass die Rastnuten ein Rastnutenprofil aufweisen, wobei die Rastabschnitte als an den Federarmen angeordnete Kugelabschnitte ausgebildet sind.

Als besonders vorteilhaft hat es sich dabei erwiesen, wenn die Rastnuten und die Rastabschnitte ein Profil aufweisen, das derart ausgebildet ist, dass ein Verdrehen des ersten Drehlagerabschnitts gegenüber dem zweiten Drehlagerabschnitt zu einer Verlagerung der Rastabschnitte von der Rastposition in die Freigabeposition entgegen der Federkraft der Federarme führt. Gemäß einer vorteilhaften Weiterbildung des Halters sind die Rastnuten als V-Nuten ausgebildet, wobei die Rastabschnitte an den Federarmen angeordnete Kugelabschnitte aufweisen. Ein Verdrehen des ersten Drehlagerabschnitts gegenüber dem zweiten Drehlagerabschnitt führt somit zu einem Abgleiten der V-Nuten und der kugelförmigen Rastabschnitte aufeinander in Umfangsrichtung. Durch dieses Abgleiten in Umfangsrichtung werden die kugelförmigen Rastabschnitte entgegen der Federkraft der Federarme nach radial außen (d.h. senkrecht zur Drehachse des Drehlagers) gedrängt und geben somit die Rastnuten wieder frei, so dass die Rastabschnitte von der Rastposition in die Freigabeposition bewegt werden.

In einer besonders kostengünstigen und zugleich stabilen Ausführungsform des Halters sind mehrere, vorzugsweise 4 Rastabschnitte vorgesehen, die spiegelbildlich zur Drehachse angeordnet sind. Dabei ist es denkbar, dass die Rastabschnitte an insgesamt 4 Federarmen angeordnet sind, welche sich in einem Winkelabstand von 90° zueinander nach radial außen erstrecken.

Erfindungsgemäß weist die Federscheibe einen ringförmigen Grundabschnitt auf, von dem sich die Federarme nach radial außen erstrecken.

Weiterhin ist es vorteilhaft, wenn die Federscheibe mit dem zweiten Drehlagerabschnitt drehfest verbunden ist. Somit kann die Federscheibe gegenüber dem Drehlagerabschnitt nicht verdreht werden.

Als besonders bevorzugt hat es sich dabei erwiesen, wenn die Federscheibe mehrere, vorzugsweise 4 Arretierungsabschnitte aufweist, die sich nach radial innen erstrecken. Vorteilhafterweise sind die Arretierungsabschnitte dann in einem Winkel von 90° zueinander angeordnet und greifen in Gegenarretierungsabschnitte des zweiten Drehlagerabschnitts derart ein, dass ein Verdrehen der Federscheibe gegenüber dem zweiten Drehlagerabschnitt verhindert ist.

Weitere Einzelheiten und vorteilhafte Weiterbildungen der Erfindung sind der nachfolgenden Beschreibung zu entnehmen anhand derer eine Ausführungsform der Erfindung näher beschrieben und erläutert ist.

Es zeigen:
- Figur 1: eine perspektivische Vorderansicht eines erfindungsgemäßen Halters;
- Figur 2: eine perspektivische Rückansicht des Halters gemäß Figur 2;
- Figur 3: einen Ausschnitt eines Schnitts durch den Halter gemäß der Figuren 1 und 2; und
- Figur 4: eine teilweise Explosionsdarstellung von Bauteilen des Halters gemäß der Figuren 1 und 2.

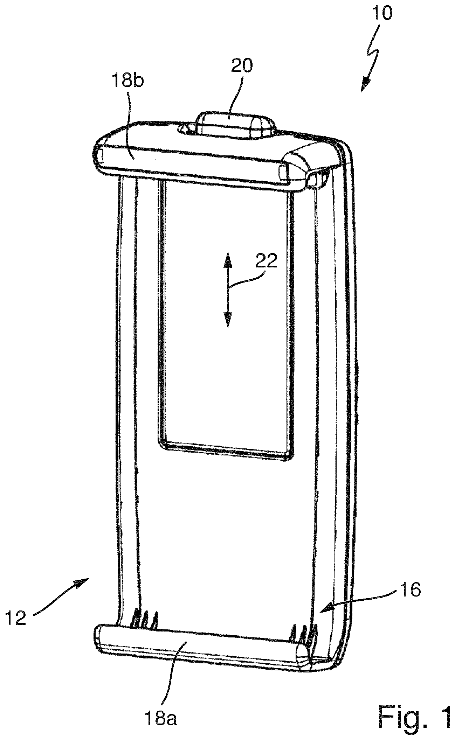

In den Figuren 1 bis 4 ist insgesamt ein erfindungsgemäßer Halter 10 zur lösbaren Befestigung eines in den Figuren nicht gezeigten flachen, in etwa rechteckigen Geräts wie eines Tablet-Computers oder eines Smartphones an einem Bauteil, insbesondere an einem Bauteil eines Kraftfahrzeugs gezeigt.

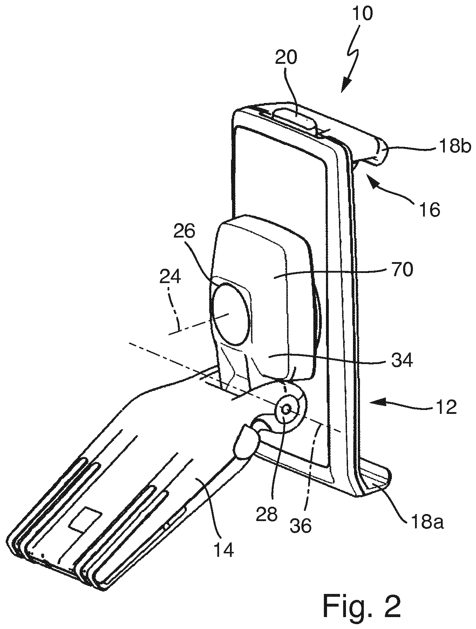

Figur 1 zeigt den Halter 10 in einer perspektivischen Vorderansicht, wobei der Halter 10 in Figur 2 in einer perspektivischen Rückansicht gezeigt ist.

Der Halter 10 umfasst eine Halteeinrichtung 12 zur lösbaren Halterung des Geräts und ein Befestigungselement 14 zur Verbindung des Halters 10 mit dem Bauteil, bspw. mit einer dafür vorgesehenen Buchse in einem Kraftfahrzeug oder mit einer aus der EP 2 437 960 B1 bekannten Befestigungseinrichtung zum Anschließen an zwei voneinander beabstandete Kopfstützenstangen eines Fahrzeugsitzes.

Die Halteeinrichtung 12 weist eine Aufnahme 16 für das Gerät und im Bereich der Aufnahme 16 angeordnete, klammerartige Halteelemente 18a, 18b zur Halterung des Geräts auf. Wie in den Figuren 1 und 2 deutlich zu erkennen ist, weist die Halteeinrichtung 12 in einem oberen Bereich ferner einen Druckknopf 20 auf, mittels derer eine Verlagerung der Halteelemente 18a, 18b gegenüber einander in Richtung des Doppelpfeils 22 und entsprechend eine Größenanpassung der Halteeinrichtung 12 ermöglicht ist. Die Halteeinrichtung 12 ist jedoch Gegenstand einer anderen Patentanmeldung und wird an dieser Stelle nicht näher erläutert.

Der Halter 10 weist ein um eine Drehachse 24 (siehe Figuren 2 bis 4) drehbares Drehlager 26 auf, das mit der Halteeinrichtung 12 verbunden ist. Der Halter 10 weist ferner ein mit dem Drehlager 26 verbundenes Schwenklager 28 auf, das mit dem Befestigungselement 14 verbunden ist.

Das Drehlager 26 weist einen ersten, mit der Halteeinrichtung 12 fest verbundenen Drehlagerabschnitt 30 auf, der auf der der Aufnahme 16 abgewandten Seite der Halteeinrichtung 12 angeordnet ist. Das Drehlager 26 weist ferner einen zweiten, mit dem Befestigungselement 14 verbundenen Drehlagerabschnitt 32 auf. Der Halter 10 weist ein Verbindungselement 34 auf, wobei der zweite Drehlagerabschnitt 32 am Verbindungselement 34 angeordnet ist und wobei das Verbindungselement 34 Schwenklagerabschnitte des Schwenklagers 28 aufweist. Das Schwenklager 28 dreht dabei um eine Schwenklagerdrehachse 36 (siehe Figur 2), die senkrecht zur Drehachse 24 des Drehlagers 26 angeordnet ist.

Der erste Drehlagerabschnitt 30 ist als Konus ausgebildet und der zweite Drehlagerabschnitt 32 ist als Gegenkonus ausgebildet. Die beiden Konusse der Drehlagerabschnitte 30, 32 sind koaxial zur Drehachse 24 des Drehlagers 26 angeordnet. Am ersten Drehlagerabschnitt 30 sind vier Rastnuten 38 vorgesehen, die über den Umfang des ersten Drehlagerabschnitts 30 in einem Winkel von jeweils 90° zueinander angeordnet sind. Die Rastnuten 38 sind als V-Nuten ausgebildet.

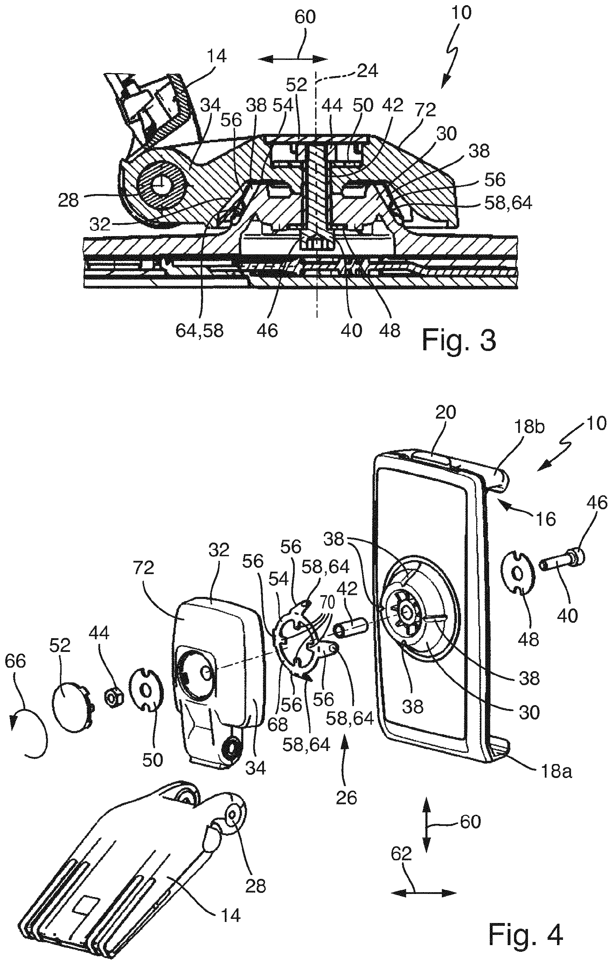

Wie insbesondere im Schnitt gemäß Figur 3 zu erkennen ist, sind die beiden Drehlagerabschnitte 30, 32 mittels einer Schraube 40, die durch eine Hülse 42 hindurchgeführt ist, und einer Mutter 44 miteinander verbunden. Die Schraube 40 und die Mutter 44 sind koaxial zur Drehachse 24 des Drehlagers 26 angeordnet und ebenfalls in der Explosionsdarstellung der Figur 4 gezeigt. In der Verschraubung sind ferner unter einem Schraubenkopf 46 der Schraube 40 und unter der Mutter 44 zwei Unterlegscheiben 48, 50 vorgesehen, wobei die Mutter 44 im Bereich des Verbindungselements 34 von einer kreisrunden Abdeckung 52 verdeckt wird.

Um eine Verrastung des Drehlagers 26 bzw. des ersten Drehlagerabschnitts 30 gegenüber dem zweiten Drehlagerabschnitt 32 zu ermöglichen, ist am Drehlager 26 senkrecht zur Drehachse 24 eine Federscheibe 54 aus einem Federstahl vorgesehen. Die Federscheibe 54 weist vier in einem Winkel von 90° zueinander und spiegelbildlich zur Drehachse 24 angeordnete Federarme 56 mit Rastabschnitten 58 auf, die senkrecht zur Drehachse 24 des Drehlagers 26 zwischen einer radial inneren Rastposition und einer radial äußeren Freigabeposition in Richtung der Doppelpfeile 60, 62 verlagerbar sind.

In der Freigabeposition der Federarme 56 sind die beiden Drehlagerabschnitte 30, 32 gegenüber einander verdrehbar, wobei die Drehlagerabschnitte 30, 32 gegenüber einander fixiert sind, wenn sich die Federarme 56 in der Rastposition befinden.

Zur Verrastung der beiden Drehlagerabschnitte 30, 32 weisen die Rastabschnitte 58 in Figur 3 und 4 deutlich erkennbare Kugelabschnitte 64 auf, die mit den Rastnuten 38 derart korrespondieren, dass die Rastabschnitte 58 bzw. die Kugelabschnitte 64 in der Rastposition zumindest teilweise in die Rastnuten 38 eingerückt sind. Die Rastabschnitte 58 bzw. die Kugelabschnitte 64 sind jeweils an einem freien Ende der Federarme 56 angeordnet, so dass insgesamt vier Rastabschnitte 58 bzw. Kugelabschnitte 64 vorgesehen sind.

Die Rastabschnitte 58 bzw. die Kugelabschnitte 64 und die Rastnuten 38 weisen ein Profil auf, das derart ausgebildet ist, dass ein Verdrehen des ersten Drehlagerabschnitts 30 gegenüber dem zweiten Drehlagerabschnitt 32 in Richtung des Pfeils 66 zu einer Verlagerung der Rastabschnitte 58 der Federscheibe 54 bzw. der Federarme 56 von der Rastposition in die Freigabeposition entgegen der Federkraft der Federarme 56 führt.

Die Federscheibe 54 weist einen ringförmigen Grundabschnitt 68 auf, von dem sich die Federarme 56 nach radial außen erstrecken. Die Federarme 56 sind winkelig vom Grundabschnitt 68 derart abgebogen, dass sie in etwa parallel zum Konus des ersten Drehlagerabschnitts 30 verlaufen.

Die Federscheibe 54 weist ferner vier Arretierungsabschnitte 70 auf, die sich vom Grundabschnitt 68 nach radial innen erstrecken und ebenfalls in einem Winkel von 90° zueinander angeordnet sind. Diese Arretierungsabschnitte 70 greifen in Gegenarretierungsabschnitte des zweiten Drehlagerabschnitts 32, die in den Figuren nicht gezeigt sind, derart ein, dass ein Verdrehen der Federscheibe 54 gegenüber dem zweiten Drehlagerabschnitt 32 verhindert ist.

Da die Rastnuten 38 ein V-förmiges Profil mit Schrägflächen aufweisen und da die Rastabschnitte 58 die Kugelabschnitte 64 aufweisen, führt ein Verdrehen des ersten Drehlagerabschnitts 30 gegenüber dem zweiten Drehlagerabschnitt 32 in Richtung des Pfeils 66 durch ein Abgleiten der Schrägflächen der Rastnuten 38 und der Kugelabschnitte 64 der Rastabschnitte 58 aufeinander zu einer Verlagerung der Rastabschnitte 58 bzw. der Federarme 56 in die Freigabeposition entgegen der Federkraft der Federarme 56.

Das Drehlager 26 ist insgesamt mit einer Abdeckung 72 vor Verschmutzungen geschützt, welche Teil des Verbindungselements ist.

Mit einem erfindungsgemäßen Halter 10 kann aufgrund der direkten Anbindung des Drehlagers 26 an die Halteeinrichtung 12 einerseits eine besonders stabile Befestigungsmöglichkeit auch für Tablet-Computer mit einer Größe von mehr als 13 Zoll bereitgestellt werden. Andererseits ist aufgrund der Rastabschnitte 58, welche durch die Federarme 56 der Federscheibe 54 in die Rastposition beaufschlagt werden, und aufgrund der vier Rastnuten 38 eine einfache, kostengünstige und sichere Möglichkeit der Verrastung des Halters 10 in einer Hochformatstellung und einer Querformatstellung realisiert.

## Patentansprüche

1. Halter (10) zur lösbaren Befestigung eines flachen, in etwa rechteckigen Geräts wie eines Tablet-Computers oder eines Smartphones an einem Bauteil, insbesondere an einem Bauteil eines Kraftfahrzeugs, wobei der Halter (10) eine Halteeinrichtung (12) zur lösbaren Halterung des Geräts und ein mit der Haltereinrichtung (12) verbundenes Befestigungselement (14) zur Verbindung des Halters (10) mit dem Bauteil aufweist, wobei ein um eine Drehachse (24) drehbares Drehlager (26) vorgesehen ist, das mit der Haltereinrichtung (12) verbunden ist und wobei ein mit dem Drehlager (26) verbundenes Schwenklager (28) vorgesehen sind, das mit dem Befestigungselement (14) verbunden ist, wobei das Drehlager (26) einen ersten mit der Halteeinrichtung (12) verbundenen Drehlagerabschnitt (30) und einen zweiten mit dem Befestigungselement (14) verbundenen Drehlagerabschnitt (32) aufweist, wobei am Drehlager (26) eine Federscheibe (54) vorgesehen ist, die mit der Federscheibe (54) einstückig verbundene Federarme (56) mit Rastabschnitten (58) aufweist, die senkrecht zur Drehachse (24) des Drehlagers (26) zwischen einer radial inneren Rastposition und einer radial äußeren Freigabeposition verlagerbar sind, wobei der erste Drehlagerabschnitt (30) gegenüber dem zweiten Drehlagerabschnitt (32) in der Freigabeposition verdrehbar ist und wobei der erste Drehlagerabschnitt (30) gegenüber dem zweiten Drehlagerabschnitt (32) in der Rastposition fixiert ist, **dadurch gekennzeichnet, dass** die Federscheibe (54) derart ausgebildet und angeordnet ist, dass die Rastabschnitte (58) mittels der Federarme (56) nach radial innen in die Rastposition vorgespannt sind, wobei die Federscheibe (54) einen ringförmigen Grundabschnitt (68) aufweist, von dem sich die Federarme (56) nach radial außen erstrecken.

2. Halter (10) nach Anspruch 1, **dadurch gekennzeichnet, dass** die Halteeinrichtung (12) eine Aufnahme (16) für das Gerät und im Bereich der Aufnahme (16) angeordnete Halteelemente (18a, 18b) zur Halterung des Geräts aufweist und dass der erste Drehlagerabschnitt (30) auf der der Aufnahme (16) abgewandten Seite der Halteeinrichtung (12) angeordnet ist.

3. Halter (10) nach Anspruch 1 oder 2, **dadurch gekennzeichnet, dass** ein Verbindungselement (34) vorgesehen ist, wobei der zweite Drehlagerabschnitt (32) am Verbindungselement (34) angeordnet ist und wobei das Verbindungselement (34) Schwenklagerabschnitte des Schwenklagers (28) aufweist.

4. Halter (10) nach wenigstens einem der vorherigen Ansprüche, **dadurch gekennzeichnet, dass** der erste Drehlagerabschnitt (26) als Konus ausgebildet ist, wobei der zweite Drehlagerabschnitt (32) als Gegenkonus ausgebildet ist.

5. Halter (10) nach wenigstens einem der vorherigen Ansprüche, **dadurch gekennzeichnet, dass** am ersten Drehlagerabschnitt (30) mehrere, vorzugsweise 4 Rastnuten (38) vorgesehen sind, die über den Umfang des ersten Drehlagerabschnitts (30) in regelmäßigen Abständen zueinander angeordnet sind.

6. Halter (10) nach Anspruch 5, **dadurch gekennzeichnet, dass** die Rastabschnitte (58) mit den Rastnuten (38) derart korrespondieren, dass die Rastabschnitte (58) in der Rastposition zumindest teilweise in die Rastnuten (38) eingerückt sind.

7. Halter (10) nach Anspruch 6, **dadurch gekennzeichnet, dass** die Rastnuten (40) und die Rastabschnitte (58) ein Profil aufweisen, das derart ausgebildet ist, dass ein Verdrehen des ersten Drehlagerabschnitts (30) gegenüber dem zweiten Drehlagerabschnitt (32) zu einer Verlagerung der Rastabschnitte (58) von der Rastposition in die Freigabeposition entgegen der Federkraft der Federarme (56) führt.

8. Halter (10) nach wenigstens einem der vorherigen Ansprüche, **dadurch gekennzeichnet, dass** mehrere, vorzugsweise 4 Rastabschnitte (58) vorgesehen sind, die spiegelbildlich zur Drehachse (28) angeordnet sind.

9. Halter (10) nach wenigstens einem der vorherigen Ansprüche, **dadurch gekennzeichnet, dass** die Federscheibe (54) mit dem zweiten Drehlagerabschnitt (32) drehfest verbunden ist.

10. Halter (10) nach Anspruch 9, **dadurch gekennzeichnet, dass** die Federscheibe (54) mehrere, vorzugsweise 4 Arretierungsabschnitte (70) aufweist, die sich nach radial innen erstrecken.

## Claims

1. A holder (10) for detachably fastening a flat, approximately rectangular device such as a tablet computer or a smartphone to a component, in particular to a component of a motor vehicle, wherein the holder (10) has a holding device (12) for detachably mounting the device and a fastening element (14) connected to the holding device (12) for connecting the holder (10) to the component, wherein a rotary bearing (26) rotatable about an axis of rotation (24) is provided which is connected to the holding device (12) and wherein a pivot bearing (28) connected to the rotary bearing (26) is provided, which is connected to the fastening element (14), wherein the rotary bearing (26) includes a first rotary bearing portion (30) connected to the holding device (12) and a second rotary bearing portion (32) connected to the fastening element (14), wherein a spring washer (54) is provided on the rotary bearing (26), wherein the spring washer (54) includes spring arms (56) integrally connected with the spring washer (54), with locking sections (58) which are moveable perpendicular to the axis of rotation (24) of the rotary bearing (26) between a radially inner locking position and a radially outer release position, wherein the first rotary bearing portion (30) is rotatable in the release position relative to the second rotary bearing portion (32) and wherein the first rotary bearing portion (30) is fixed in the locking position relative to the second rotary bearing portion (32), **characterized in that** the spring washer (54) is designed and situated in such a way that the locking sections (58) are biased radially inward into the locking position by means of the spring arms (56), wherein the spring washer (54) has an annular base portion (70) from which the spring arms (56) extend radially outward.

2. The holder (10) according to claim 1, **characterized in that** the holding device (12) includes a receptacle (16) for the device and holding elements (18a, 18b) situated in the area of the receptacle (16) for holding the device, and that the first rotary bearing portion (30) is situated on the side of the holding device (12) facing away from the receptacle (16).

3. The holder (10) according to claim 1 or 2, **characterized in that** a connecting element (34) is provided, wherein the second rotary bearing portion (32) is situated on the connecting element (34) and wherein the connecting element (34) includes pivot bearing sections of the pivot bearing (28).

4. The holder (10) according to at least one of the preceding claims, **characterized in that** the first rotary bearing portion (26) is formed as a cone, wherein the second rotary bearing portion (32) is formed as a counter-cone.

5. The holder (10) according to at least one of the preceding claims, **characterized in that** multiple, preferably, 4 locking grooves (38) are provided on the first rotary bearing portion (30), which are situated over the circumference of the first rotary bearing portion (30) at regular intervals from each other.

6. The holder (10) according to claim 5, **characterized in that** the locking sections (58) correspond to the locking grooves (38) in such a way that the locking sections (58) are at least partially moved into the locking grooves (38) in the locking position.

7. The holder (10) according to claim 6, **characterized in that** the locking grooves (40) and the locking sections (58) have a profile which is designed in such a way that a rotation of the first rotary bearing portion (30) relative to the second rotary bearing portion (32) results in a movement of the locking sections (58) from the locking position into the release position against the spring force of the spring arms (56) .

8. The holder (10) according to at least one of the preceding claims, **characterized in that** multiple, preferably 4, locking sections (58) are provided, which are situated in mirror image to the axis of rotation (28).

9. The holder (10) according to at least one of the preceding claims, **characterized in that** the spring washer (54) is rotationally fixedly connected to the second pivot bearing portion (32).

10. The holder (10) according to claim 9, **characterized in that** the spring washer (54) includes multiple, preferably 4, locking sections (70) which extend radially inward.

## Revendications

1. Support (10) pour la fixation libérable d'un appareil plat, à peu près rectangulaire tel qu'une tablette-PC (30) ou un smartphone sur une pièce, en particulier sur une pièce d'un véhicule à moteur, dans lequel le support (10) présente un dispositif de retenue (12) pour la retenue libérable de l'appareil et un élément de fixation (14) relié au dispositif de retenue (12) pour la liaison du support (10) à la pièce, dans lequel un palier rotatif (26) pouvant tourner autour d'un axe de rotation (24) est prévu, qui est relié au dispositif de retenue (12) et dans lequel un palier pivotant (28) relié au palier rotatif (26) est prévus, qui est relié à l'élément de fixation (14), dans lequel le palier rotatif (26) présente une première partie de palier rotatif (30) reliée au dispositif de retenue (12) et une deuxième partie de palier rotatif (32) reliée à l'élément de fixation (14), dans lequel une rondelle ressort (54) est prévue sur le palier rotatif (26), qui présente des bras à ressort (56) reliés d'une seule pièce à la rondelle ressort (54) avec des parties d'encliquetage (58), qui sont déplaçables perpendiculairement à l'axe de rotation (24) du palier rotatif (26) entre une position d'encliquetage radialement intérieure et une position de libération radialement extérieure, dans lequel la première partie de palier rotatif (30) peut être amenée en rotation par rapport à la deuxième partie de palier rotatif (32) dans la position de libération et dans lequel la première partie de palier rotatif (30) est fixée dans la position d'encliquetage par rapport à la deuxième partie de palier rotatif (32), **caractérisé en ce que** la rondelle ressort (54) est réalisée et disposée de telle sorte que les parties d'encliquetage (58) sont précontraintes radialement vers l'intérieur dans la position d'encliquetage au moyen des bras à ressort (56), dans lequel la rondelle ressort (54) présente une partie de base (68) annulaire, à partir de laquelle les bras à ressort (56) s'étendent radialement vers l'extérieur.

2. Support (10) selon la revendication 1, **caractérisé en ce que** le dispositif de retenue (12) présente un logement (16) pour l'appareil et des éléments de retenue (18a, 18b) disposés dans la zone du logement (16) pour la retenue de l'appareil et que la première partie de palier rotatif (30) est disposée sur la face du dispositif de retenue (12) opposée au logement (16) .

3. Support (10) selon la revendication 1 ou 2, **caractérisé en ce qu'**un élément de liaison (34) est prévu, dans lequel la deuxième partie de palier rotatif (32) est disposée sur l'élément de liaison (34) et dans lequel l'élément de liaison (34) présente des parties de palier pivotant du palier pivotant (28).

4. Support (10) selon au moins l'une des revendications précédentes, **caractérisé en ce que** la première partie de palier rotatif (26) est réalisée sous la forme d'un cône, dans lequel la deuxième partie de palier rotatif (32) est réalisée sous la forme d'un cône complémentaire.

5. Support (10) selon au moins l'une des revendications précédentes, **caractérisé en ce que** plusieurs, de préférence 4 rainures d'encliquetage (38) sont prévues sur la première partie de palier rotatif (30), qui sont disposées à intervalles réguliers les unes par rapport aux autres sur la périphérie de la première partie de palier rotatif (30).

6. Support (10) selon la revendication 5, **caractérisé en ce que** les parties d'encliquetage (58) correspondent avec les rainures d'encliquetage (38), de telle sorte que les parties d'encliquetage (58), dans la position d'encliquetage, sont enclenchées au moins en partie dans les rainures d'encliquetage (38).

7. Support (10) selon la revendication 6, **caractérisé en ce que** les rainures d'encliquetage (40) et les parties d'encliquetage (58) présentent un profil, qui est réalisé de telle sorte qu'une rotation de la première partie de palier rotatif (30) par rapport à la deuxième partie de palier rotatif (32) entraîne un déplacement des parties d'encliquetage (58) à partir de la position d'encliquetage dans la position de libération à l'encontre de la force de ressort des bras à ressort (56).

8. Support (10) selon au moins l'une des revendications précédentes, **caractérisé en ce que** plusieurs, de préférence 4 parties d'encliquetage (58) sont prévues, qui sont disposées de manière inversée par rapport à l'axe de rotation (28).

9. Support (10) selon au moins l'une des revendications précédentes, **caractérisé en ce que** la rondelle ressort (54) est reliée de manière solidaire en rotation à la deuxième partie de palier rotatif (32).

10. Support (10) selon la revendication 9, **caractérisé en ce que** la rondelle ressort (54) présente plusieurs, de préférence 4 parties d'arrêt (70), qui s'étendent radialement vers l'intérieur.
